# EUROPEAN PATENT SPECIFICATION

(11) **EP 0 831 219 B1**
(45) Date of publication and mention of the grant of the patent: **05.12.2001**
(21) Application number: 97116303.5
(22) Date of filing: 18.09.1997
(51) Int. Cl.: F02D 41/04, F02D 13/02, F01N 7/00

(54) **Method for controlling the operation of an internal combustion engine**
Verfahren zur Betriebssteuerung einer Brennkraftmaschine
Méthode pour commander le fonctionnement d'un moteur à combustion interne

(30) Priority: 18.09.1996 JP 24632296; 18.09.1996 JP 24632196
(43) Date of publication of application: 25.03.1998
(73) Proprietor: YAMAHA HATSUDOKI KABUSHIKI KAISHA, Iwata-shi Shizuoka-ken, 438 (JP)
(72) Inventor: Motoyama, Yu, c/o Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- EP-A- 0 307 898
- GB-A- 2 209 797
- US-A- 5 031 401
- PATENT ABSTRACTS OF JAPAN vol. 095, no. 010, 30 November 1995 & JP 07 189675 A (MITSUBISHI MOTORS CORP), 28 July 1995

## Description

The present invention relates to a method for controlling the operation of an internal combustion engine comprising an exhaust system having an exhaust control valve as well as an internal combustion engine for performing said method according to the preamble of claim 16.

US-A-5,031,401 discloses an engine having an exhaust control valve, fuel injection, an accelerator and a controller, the transient state of the engine operation is independent as being the cold starting condition and the steady state of operating being after the cold start, whereas the valve is opened as pressure builds up in the exhaust, that means the opening degree of the valve increases upon transient from cold starting conditions to steady running conditions of normal operating temperature.

However, this document only deals with a transient state as a cold start condition so that the controller is not adapted to control the engine running conditions during transient states, for example rapid acceleration and/or deceleration, so that these engine running conditions cannot be controlled in an optimal way during driving after warming up the engine.

In principle, the same applies to document JP-A-0718 9675.

Moreover, an in-cylinder type of two-cycle engine has been proposed which operates in the following steps: Fresh mixture is introduced into a crank chamber through an in take passage having a throttle valve, and subjected to a primary compression. While the primarily compressed fresh mixture scavenges the cylinder, fuel is injected at a timing somewhere during the scavenging, exhaust, and compression strokes from the fuel injection valve disposed in the combustion chamber wall, ignited after the compression stroke and burned. The burned gas is exhausted from the combustion chamber prior to the next scavenging stroke.

The two-cycle engine has a problem that irregular combustion is likely to occur especially in the low speed, low load operation range because of reasons such as a small amount of fresh mixture for scavenging and resultant low in-cylinder pressure causing reverse flow of burned gas present in the exhaust passage back into the cylinder, diffusion of injected fuel causing decrease in the fuel concentration, and poor flame propagation due to low in-cylinder temperatures.

Therefore, the inventors have developed an arrangement for the in-cylinder injection type of two-cycle engine employing an exhaust control valve for variably controlling the cross-sectional area of the exhaust passage, so that the irregular combustion is minimized by maintaining a high pressure at the beginning of compression and a high in-cylinder temperature by reducing the cross-sectional area of the exhaust passage.

The opening of the exhaust control valve of the in-cylinder injection type of two-cycle engine described above is controlled according to a control map with the top priority essentially given to the combustion stability. Therefore, though the amount of intake air must be rapidly increased at the time of rapid acceleration, there is a concern that the exhaust control valve may become a resistance against the exhaust gas flow and so sufficient acceleration performance may not be obtained.

Another concern is that, when the exhaust control valve is controlled according to the control map during rapid acceleration, discharging high temperature exhaust gas from the engine may be restricted and may result in abnormally high cylinder temperatures or engine stall.

Moreover, the start-up and warm-up operation of the in-cylinder injection type of two-cycle engine having the exhaust control valve described above is made with the accelerator fully closed. Therefore, the exhaust control valve is controlled to almost fully closed state.

The term start-up operation as used herein refers to the process form rotating the starter motor of a standing engine by turning on the main switch and to the engine revolution reaching a predetermined level which is higher than the idling revolution.

From the viewpoint of reducing the load on the starter motor and the battery, it is preferable that the engine revolution be rapidly raised beyond the predetermined level. And during the warm-up period after the start-up, the engine revolution is preferably maintained high for shortening the warm-up period.

However, in the above-described arrangement in which the exhaust control valve is controlled to be opened according to the accelerator opening, the exhaust control valve is closed at the time of start-up because the accelerator is closed.

Therefore, even if the fuel injection rate is increased and the throttle valve opening is increased, the intake air amount does not increase proportionately, the engine revolution does not increase rapidly, and the load on the starter motor and the battery increases at the time of start-up. Also, the warm-up time becomes longer and so the engine may not be used actually immediately after the start-up.

Accordingly, it is an objective of the present invention to provide an approved method for controlling the operation of an internal combustion engine as well as an improved internal combustion engine that are capable to always reliably ensure a stabilized combustion with a good fuel economy during a stationary operating state and simultaneously ensures improved response during transient operating states of the engine.

According to the first aspect of the present invention this objective is solved according to the present invention by a method for controlling the operation of an internal combustion engine, said engine comprising an air intake system having a throttle valve, an exhaust system having an exhaust control valve, a fuel injection means, an accelerator means, and a control device for controlling engine components in response to engine operating conditions detected, such as engine speed and/or engine load, said method comprising the steps of detecting an engine operating state, determining whether said engine operating state is a stationary operating state during which the engine operating conditions are constant or a transient state which comprises at least rapid acceleration, controlling an opening degree of said exhaust control valve toward an opening degree corresponding to the engine speed and/or engine load responsive opening degree of the exhaust control valve during the stationary operating state, and controlling said opening degree of said exhaust control valve to a greater opening degree during said transient operating state, compared to the stationary operating state conditions, for the same engine speed and/or engine load.

Further, according to the second aspect of the present invention this objective is solved by an Internal combustion engine comprising an air intake system having a throttle valve, an exhaust system having an exhaust control valve, a fuel injection means, an accelerator means, and a control device for controlling engine components in response to engine operating conditions detected, such as engine speed and/or engine load, said control device being adapted to detect an engine operating state, to determine whether said engine operating state is a stationary operating state during which the engine operating conditions are constant or a transient state, to control an opening degree of said exhaust control valve toward an opening degree corresponding to the engine speed and/or engine load responsive opening degree of the exhaust control valve during the stationary operating state, and to control said opening degree of said exhaust control valve to a greater opening degree during said transient operating state, compared to the stationary operating state conditions, for the same engine speed and/or engine load, characterized in that said control device is adapted to determine whether said transient state at least is a rapid acceleration. Advantageous embodiments of the present invention concerning the internal combustion engine are laid down in further subclaims dependent on the independent apparatus claim.

The invention controls the exhaust control valve opening to an opening degree corresponding to engine speed and/or engine load (herein further called: accelerator-revolution-dependent exhaust control valve opening) during the stationary or normal operating state and to an opening degree greater than the accelerator-revolution-dependent exhaust control valve opening during the transient operation state. As a result, the exhaust control valve provides effects of a highly stabilized combustion state with a good fuel economy during the normal operation state, and a higher acceleration performance while avoiding abnormal temperature rise or stall of the engine during the transient operation.

In this specification the term "stationary or normal operating state" means all operating states other than start-up, warm-up, rapid acceleration and rapid deceleration operating states, respectively.

That is to say, during the rapid acceleration, the exhaust control valve is opened wider than the opening for the normal operation corresponding to the same accelerator opening and engine revolution. As a result, the exhaust gas flow passage resistance decreases, the intake air amount increases, the engine revolution increases rapidly, and the acceleration performance is improved. During the rapid deceleration, the exhaust control valve is opened wider than the opening for the normal operation corresponding to the same accelerator opening and engine revolution. As a result, discharge of high temperature gas is not hindered. and the engine temperature rise or stall is avoided.

Moreover, the greater the increase rate per unit time of the accelerator opening and/or the engine revolution during the rapid acceleration the greater is made the increment of the exhaust control valve opening. A still further embodiment of the invention controls so that the smaller the accelerator opening and the engine revolution in an operation range during the rapid acceleration, the greater is made the exhaust valve opening increment. As a result, an effect is that the acceleration performance is all the more improved.

Another embodiment of the invention controls the opening of the exhaust control valve to an opening greater than the accelerator-revolution-dependent exhaust control valve opening by delaying the closing speed of the exhaust control valve in proportion to the magnitude of the decrease rate per unit time of the accelerator opening and/or the engine revolution. As a result, discharge of high temperature gas is not hindered, and the engine temperature rise or stall is avoided more securely.

Further, it is possible to control the exhaust control valve opening to an accelerator-dependent exhaust control valve opening set according to accelerator opening in the normal operation state and to an opening greater than the accelerator-dependent exhaust control valve opening in at least one of the start-up operation state and the warm-up operation state. As a result, in the normal operation state with a low load, the cross-sectional area of the exhaust passage is throttled with the exhaust control valve and therefore the pressure and the temperature in the cylinder is maintained high at the beginning of compression to restrict the occurrence of irregular combustion. And in the start-up and warm-up operation states, the exhaust passage cross-sectional area is increased in proportion to the increase in the exhaust control valve opening, the amount of fresh charge is increased, the fuel injection rate is increased, the engine revolution increases rapidly, and the loads on the starter motor and battery are reduced, and the warm-up time is shortened.

Moreover, in the normal operation state, the exhaust control valve opening is controlled to an accelerator-revolution-dependent opening set according to the accelerator opening and the engine revolution, and in at least one of the start-up operation state and the warm-up operation state to an opening greater than the accelerator-revolution-dependent opening. Therefore, with the same function as that of the above mentioned arrangement, the irregular combustion is restricted in the normal operation, the engine revolution increases rapidly in the start-up and warm-up operation states, the loads on the starter motor and battery are reduced, and the warm-up time is shortened.

In addition, the lower the engine cooling water temperature, the greater is made the increment of the exhaust control valve opening in the start-up operation state or in the warm-up operation state. As a result, the engine revolution is rapidly increased even when the engine temperature is low and the warm-up time is shortened.

Further, it is possible that the fuel injection rate in the start-up or warm-up operation state is increased to a rate greater than an accelerator opening dependent injection rate commensurate with the accelerator opening. As a result. the fuel injection rate is made to be commensurate with the increased amount of fresh charge clue to the increase in the exhaust control valve, engine revolution may be increased more securely and the warm-up time is further shortened.

According to another embodiment, the throttle valve opening in the start-up or warm-up operation state is controlled to an opening greater than an accelerator-dependent throttle valve opening commensurate with the accelerator opening. As a result, the increase in the exhaust control valve opening and the increase in the throttle valve opening work together so that the fresh charge amount is securely increased. the engine revolution in the start-up operation is securely increased, and the warm-up time in the warm-up operation is more securely shortened.

With a still further embodiment, the opening of the exhaust control valve is controlled to the accelerator-dependent exhaust control valve opening in the normal operation state, to a start-up exhaust control valve opening which is greater than the accelerator dependent exhaust control valve opening in the start-up operation state, and to a warm-up exhaust control valve opening which is between the accelerator-dependent exhaust control valve opening and the start-up exhaust control valve opening. As a result, the irregular combustion is restricted in the normal operation, the engine revolution increases rapidly in the start-up state, and the warm-up time is shortened in a well-balanced manner.

According to a further embodiment, the opening of the exhaust control valve is controlled to the accelerator-revolution-dependent exhaust control valve opening in the normal eperation state, to a start-up exhaust control valve opening which is greater than the accelerator-revolution-dependent exhaust control valve opening in the start-up operation state, and to a warm-up exhaust control valve opening which is between the accelerator-revolution-dependent exhaust control valve opening and the start-up exhaust control valve opening. As a result, the irregular combustion is restricted in the normal operation, the engine revolution increases rapidly in the start-up state, and the warm-up time is shortened in a well-balanced manner.

In the following, the present invention is explained in greater detail subject to several embodiments thereof in conjunction with the accompanying drawings, wherein:
FIG. 1 is a left side view of an outboard motor employing the two-cycle engine of the first embodiment according to claims 1 through 4.
FIG. 2 is a cross-sectional plan view of the outboard motor of the first embodiment.
FIG. 3 is a cross-sectional rear view of the engine of the first embodiment.
FIG. 4 illustrates exhaust control valve of the engine of the first embodiment.
FIG. 5 is a block constitution diagram for the operation control device of the engine of the first embodiment.
FIGs. 6 through 8 are flow charts for describing the control actions of the engine of the first embodiment.
FIGs. 9 through 19 are conceptual drawings for control data of the engine of the first embodiment.

### (Description of Symbols)

6: In-cylinder injection type of two-cycle engine
21: Cylinder
27: Ignition plug
41: Exhaust port
42: Independent passage
40: Confluence passage
43: Exhaust control valve

49: Fuel injection valve
43, 70, 80: Exhaust control valve
71, 81: Valve plate
72, 82: Valve shaft
73: Connection mechanism

Although the present invention is applicable in general to internal combustion engines, the invention will be described by example of a two-stroke cycle internal combustion engine.

Embodiments of the invention will be hereinafter described in reference to the appended drawings.

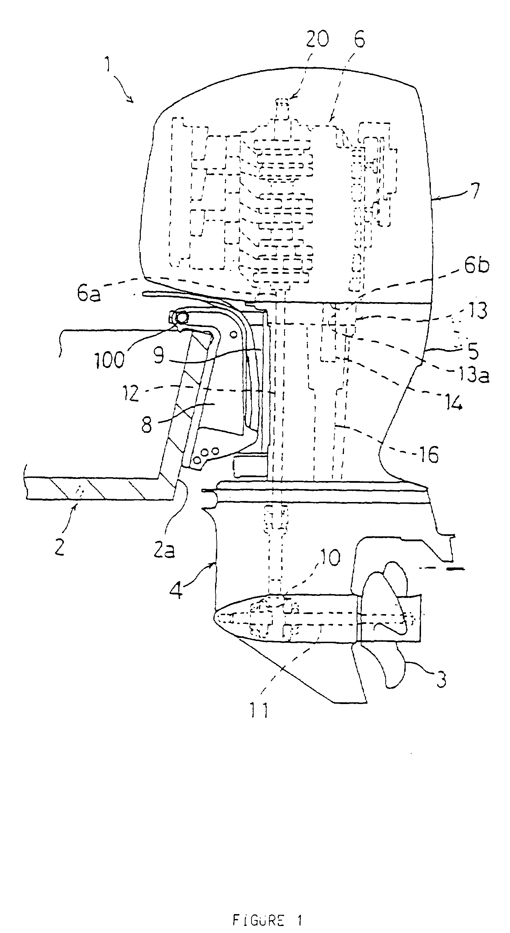

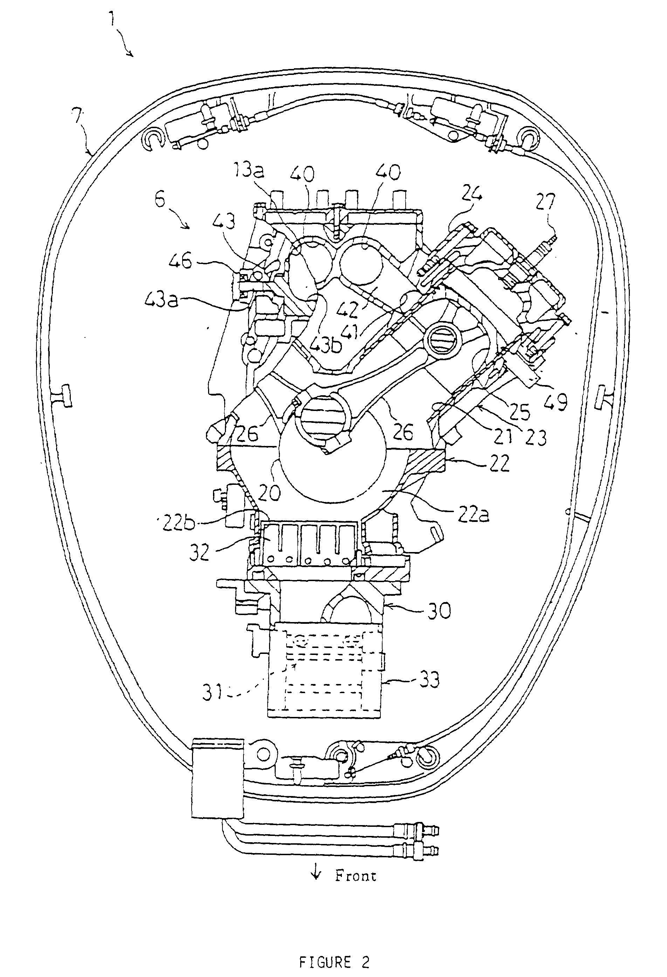

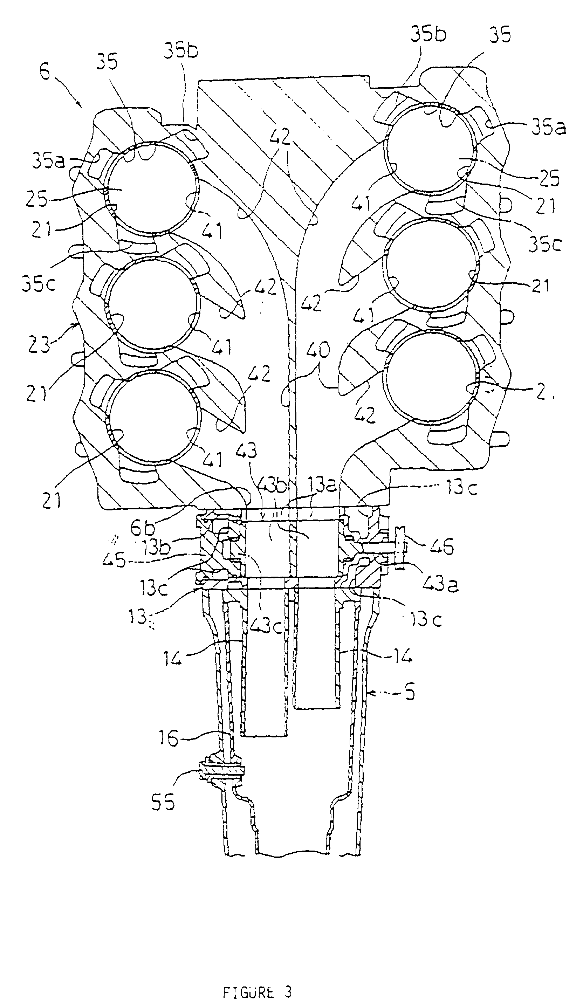

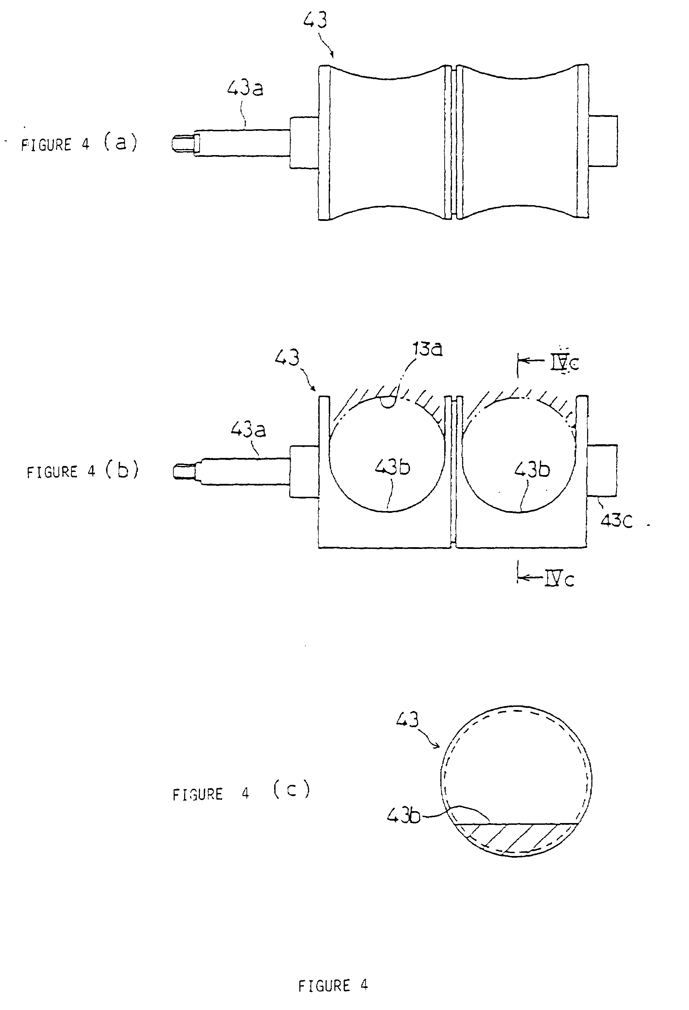

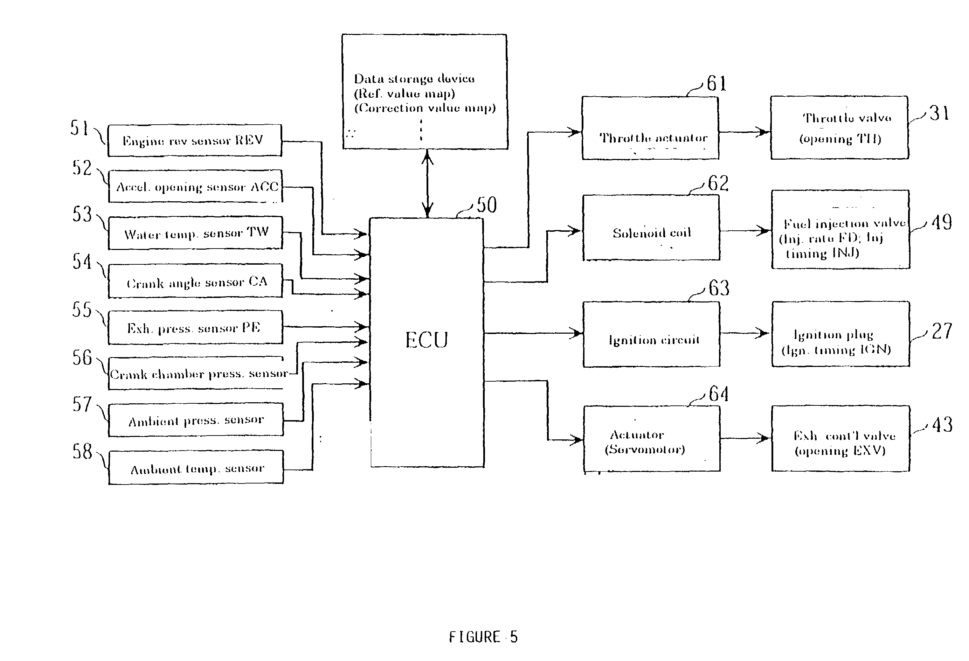

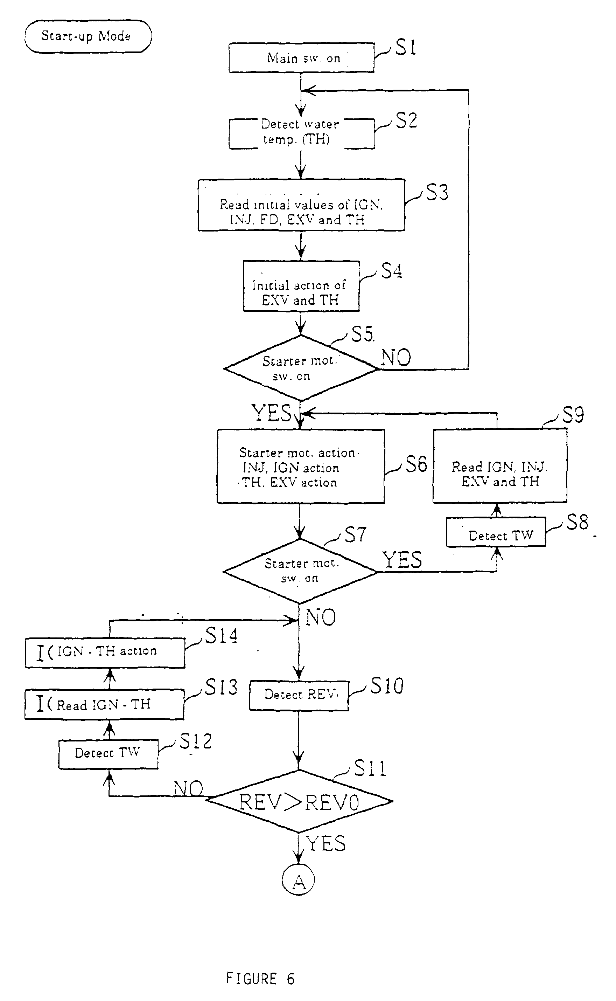

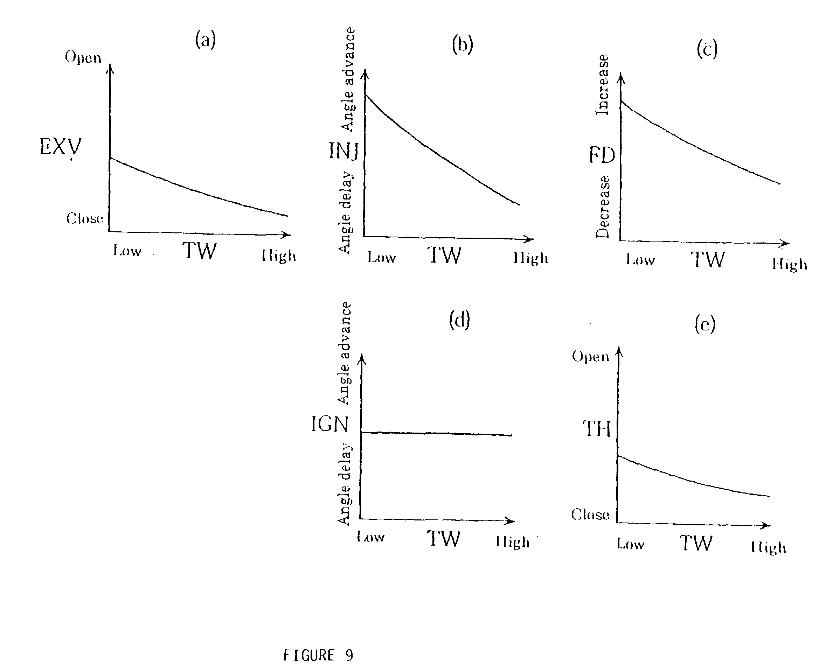

FIGs. 1 through 19 illustrate an in-cylinder injection type of two-cycle gasoline engine as an embodiment of the invention of . FIG 1 is a side view of an outboard motor employing the engine of the embodiment. FIG. 2 is a cross-sectional plan view of the same engine. FIG. 3 is a cross-sectional rear view of the same engine. FIG. 4 illustrates the exhaust control valve. FIG. 5 a block constitution diagram for the operation control device. FIGs. 6 through 8 are flow charts for describing the control actions. FIGs. 9 through 19 are conceptual drawings for control data.

In the drawings are shown: an outboard motor 1 employing an embodiment of the invention supported through a swivel arm 9 and a clamp brack on the stern 2a of a hull 2 for free up and down swinging about a support shaft 100. During cruising, the outboard motor 1 is in the vertical attitude with its crankshaft 20 generally vertical.

Roughly speaking, the outboard motor 1 comprises a thrusting propeller 3 disposed in a lower case 4 to the top of which is connected an upper case 5 to the top of which is mounted an engine 6 covered with a top cowl 7. The rotation of the crankshaft 20 of the engine 6 is transmitted to the propeller 3 through an output shaft 6a connected to the crankshaft 20. a vertically extending drive shaft 12. a bevel gear mechanism 10, and a horizontally extending propeller shaft 11.

The engine 6 is a water-cooled, V-type, six-cylinder, two-cycle engine: roughly comprising, a crankcase 22 including the crankshaft 20, a cylinder body 23 having six cylinders (cylinder bores) 21 forming two banks in a V-shape and connected to the crankcase 22. a cylinder head 24 disposed on the cylinder body 23, six pistons 25 respectively inserted for free sliding in the cylinders 21 and connected through connecting rods 26 to the crankshaft 20.

Ignition plugs 27 are screwed into the cylinder head 24. Electrodes of the ignition plugs 27 are disposed to face the insides of combustion chambers surrounded with the cylinder head 24, the cylinders 21 of the cylinder body 23, and the pistons 25. The ignition plugs 27 are energized with an ignition circuit 63 (See FIG. 5.) to produce sparks in the combustion chambers at specified timings.

The intake system of the engine 6 is constituted as described below. The crankcase 22 is formed with openings 22b respectively communicating with crank chambers 22a each corresponding to each cylinder 21. Each of the openings 22b is connected through a reed valve 32 to an intake passage 30. A throttle body 33 including a throttle valve 31 is connected to the upstream side of the intake passage 30. The throttle valve 31 is driven to open and close with a throttle actuator 61 (See FIG. 5).

The cylinder body 23 is formed with two main scavenging passages 35b and 35c for each cylinder 21. and one opposing scavenging passage 35a for each cylinder 21, to make connection between each crank chamber 22a and each cylinder 21. The scavenging ports 35 of the scavenging passages 35a, 35b, and 35c are open to the inside of the cylinder 21.

Fuel injection valves 49. one for each cylinder 21. are provided in the side wall of the cylinder body 23. Each fuel injection valve 49 is connected to a fuel supply rail (not shown) with its end portion having a pressure adjustment valve. High pressure fuel is supplied through a fuel pump to the fuel supply rail. The high pressure fuel is injection-supplied into the cylinder 21 while an injection nozzle is open as a valve piece is moved by a solenoid coil 62 (See FIG. 5.) built in the fuel injection nozzle 49.

The exhaust system of the engine 6 is constituted as described below. The cylinder body 23 is formed with an exhaust branch passage (independent passage) 42 connected to an exhaust port 41 opening to each cylinder 21. For each bank of cylinders, the exhaust branch passages 42 are joined to one exhaust confluence passage 40 running vertically generally parallel to the crankshaft 20. The lower end exhaust opening 6b of each of the exhaust confluence passages 40 is open to the underside of the cylinder body 23.

An exhaust guide 13 is connected to the underside of the cylinder body 23. The exhaust guide 13 is formed with paired exhaust holes 13a, 13a connecting to the lower end exhaust openings 6b, and connected to exhaust pipes 14 respectively extending from the exhaust holes 13a downward. To the exhaust guide 13 is connected a muffler 16 surrounding the exhaust pipe 14 and forming an exhaust expansion chamber. The lower end of the muffler 16 is open to the inside of the lower case 4.

An exhaust control valve 43 for variably controlling the cross-sectional area of the exhaust passage is disposed at a position in the exhaust guide 13 downstream of the confluence point where all the independent passages 42 join together. The exhaust control valve 43 is disposed in a valve hole 13b bored normal to the axial line of the exhaust pipe 14, is made by cutting off part of a round stainless steel bar to form coaxial valve portions 43b, 43b for opening and closing the exhaust holes 13a. One end of the valve portion 43b is formed with an integral drive shaft 43a while the other end thereof is formed with an integral support shaft 43c.

The exhaust control valve 43 is adapted to rotate between a wide open position where the valve portion 43b is flush with the inside surface of the exhaust hole 13a and a fully closed position where the valve portion 13a is upright in the exhaust hole 13a so that the exhaust hole 13a is fully closed.

A cooling jacket 13c is formed around the valve hole 13b of the exhaust guide 13 to cool the exhaust control valve 43. A cap member 45 for rotatably supporting the exhaust control valve 43 and for closing the opening of the valve hole 13b is fit in the opening of the valve hole 13b.

The exhaust control valve 43 is driven with a drive actuator 64 (See FIG. 5.) in opening and closing directions through a drive cable (not shown) and a pulley 46 secured to the drive shaft 43a.

An exhaust pressure sensor 55 is disposed in the muffler 16 to detect pressure in the exhaust passage. The exhaust pressure sensor 55 is disposed to pass through from outside the upper case 5 into the muffler 16. A detecting portion of the sensor 55 is located near the downstream opening of the exhaust pipe 14.

FIG. 5 shows an ECU 50 for controlling the operation of the engine 6. Signals representing the operating state of the engine 6 are sent from various sensors to the ECU 50. Such signals include for example; an engine revolution signal REV from a revolution sensor 51, an accelerator opening (for example accelerator pedal travel) signal ACC from an accelerator opening sensor 52, an engine cooling water temperature signal TW from a water temperature sensor 53, a crank angle (piston position) signal CA from a crank angle sensor 54, an in-exhaust pipe pressure (back pressure) signal PE from the exhaust pressure sensor 55, a crank chamber pressure signal from a crank chamber pressure sensor 56, an ambient pressure signal from an ambient pressure sensor 57, and an ambient temperature signal from an ambient temperature sensor 58.

The ECU 50 performs various calculations using various signals coming from the above-described sensors and representing the engine operation state, according to a preset program, and using various control maps stored in a data storage, and outputs various control signals to various actuators. The output signals include for example; a throttle valve opening signal TH to a throttle actuator 61 for driving the throttle valve 31 in opening and closing directions, a fuel injection duration (injection rate) signal FD and fuel injection start timing signal INJ to a solenoid coil 62 for driving a fuel injection valve 49 in opening and closing directions, an ignition signal IGN to an ignition circuit 63 for supplying a high tension current to the ignition plug 27. and an exhaust control valve opening signal EXV to an actuator 64 for driving the exhaust control valve 43 in opening and closing directions.

The opening of the throttle valve 31 and the opening of the exhaust control valve 43 are detected with a throttle opening sensor and an exhaust control valve opening sensor (both not shown) and the detected signals are fed back to the ECU 50.

Here, various controls with the ECU 50 are performed basically as described below.

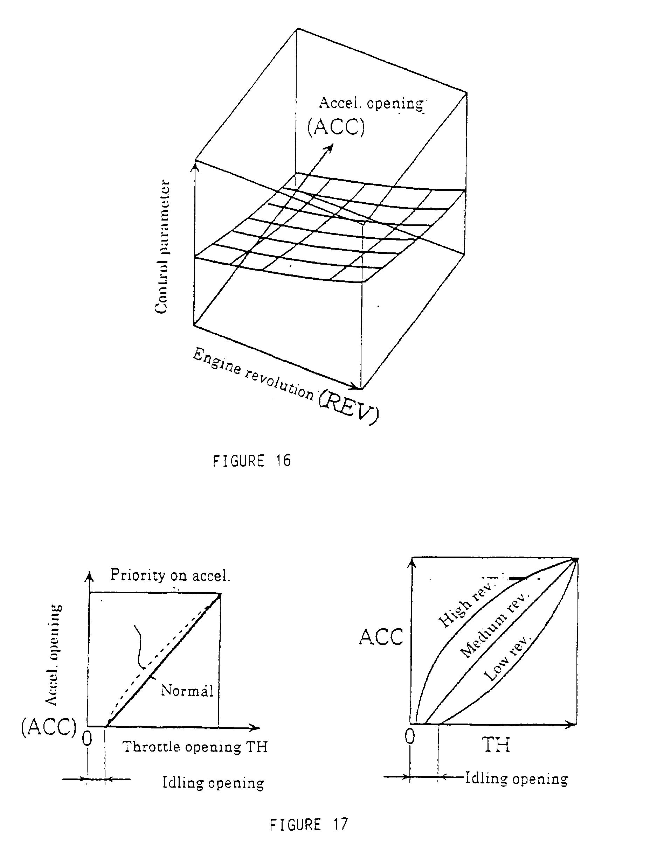

First, referring to FIG. 16 conceptually showing the control data. values of control parameters such as the throttle valve opening TH. ignition timing IGN, fuel injection timing INJ, fuel injection rate FD, and exhaust control valve opening EXV are set according to the engine revolution REV and the accelerator opening ACC. It is also possible to determine the TH from the REV and the ACC. and to determine the IGN, INJ, FD, and EXV from the TH and REV. In this way, the control of the engine load is facilitated.

The throttle opening TH and the accelerator opening ACC are controlled in the following relationship. While the throttle opening TH and the accelerator opening ACC are normally set to an identical gradient, it may also be arranged as shown in FIG. 17(a) to give priority to acceleration by increasing the gradient of the throttle opening TH greater than that of the accelerator opening ACC, or as shown in FIG. 17(b) to change the gradient and the idling opening depending on the engine revolution.

The ignition timing IGN at an engine operation point determined with the engine revolution REV and the accelerator opening ACC is set and selected according to which one of the output, fuel economy, exhaust gas cleaning, and riding comfort is deemed important.

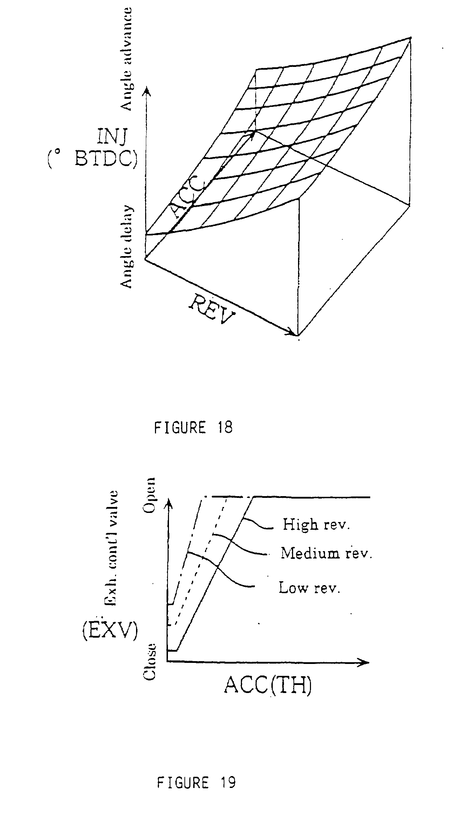

The fuel injection start timing INJ is controlled as shown in FIG. 18 to be advanced with the increase in the engine revolution or with the increase in the engine load. The fuel injection duration FD is controlled to be longer with the increase in the accelerator opening ACC.

The exhaust control valve opening EXV is set as shown in FIG. 19 to be smaller with the decrease in the revolution and with the decrease in the load. When the load is medium and above, it is controlled to be wide open irrespective of the revolution.

Here, the ECU 50 has the following control functions which are peculiar to this embodiment.

### [Exhaust Control Valve Opening Control Function]

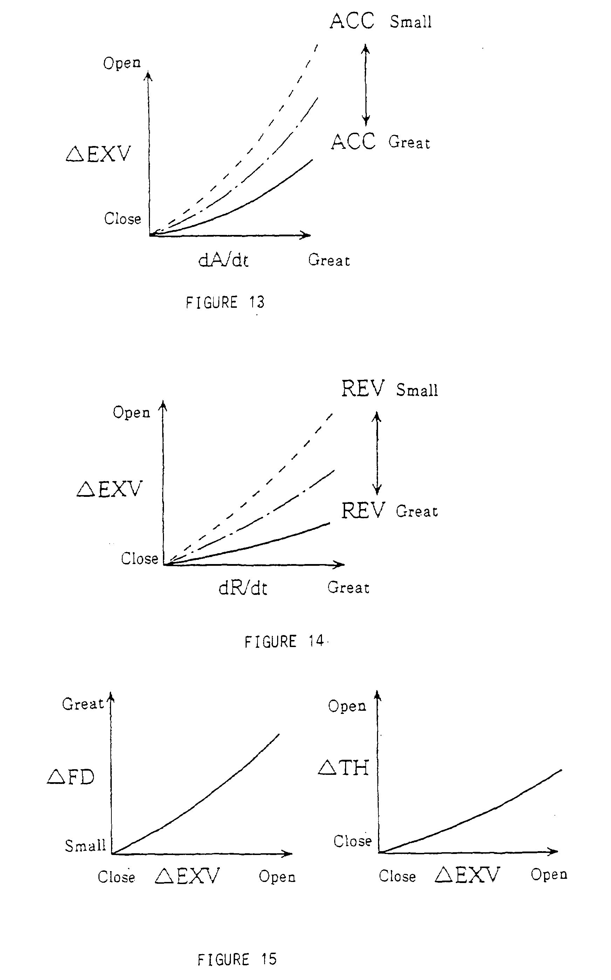

(1) In the normal (stationary) operating state with the accelerator opening at a specified idling opening or greater and with the accelerator opening changing rate at a specified value or smaller, the opening EXV of the exhaust control valve 43 is controlled to the accelerator-revolution-dependent exhaust control valve opening EXVo set according to the accelerator opening ACC and/or engine revolution REV. There is an operation state with the accelerator opening greater than the specified opening while the engine revolution is small but the external load is great (for example when the engine is used as a power source of a vehicle during an uphill driving). This operation state is similarly controlled as part of the normal (stationary) operation state.
(2) In the start-up operation state or warm-up operation state, the exhaust control valve opening EXV is increase-controlled to an opening greater than the accelerator-revolution-dependent exhaust control valve opening EXVo. In this case, the control is made that the lower the engine cooling water temperature TW, the greater the increment Δ EXV of the accelerator-revolution-dependent exhaust control valve opening EXVo (See FIG. 9), and the exhaust control valve opening EXV during the warm-up operation is set to an opening between the accelerator-revolution-dependent exhaust control valve opening EXVo and the exhaust control valve opening at the time of starting up the engine.
(3) In the idling operation state with the accelerator opening smaller than the specified idling opening, the exhaust control valve opening EXV is controlled to be smaller than the accelerator-revolution-dependent exhaust control valve opening EXVo when the engine revolution REV is higher than a target idling revolution REVo, and to be greater than the accelerator-revolution-dependent exhaust control valve opening EXVo when the engine revolution REV is lower than the target idling revolution REVo. There is an operation state with the accelerator opening smaller than the specified opening while the engine revolution is great but the external load is small (for example when the engine is used as a power source of a vehicle during a downhill driving). This operation state is similarly controlled as part of the idling operation state.
(4) In the transient operation state, the exhaust control valve opening EXV is controlled to an opening greater than the accelerator-revolution-dependent exhaust control valve opening EXVo. In the transient operation state (rapid acceleration state), the control is made that the greater the accelerator opening increase rate per unit time dA/dt and/or the engine revolution increase rate per unit time dR/dt. the greater is made the increment Δ EXV of the exhaust control valve opening. In this case, the control is made that the smaller the throttle opening and the engine revolution in an operation range, the greater is made the exhaust valve opening increment (See FIGs. 13 and 14).
(5) In the rapid deceleration state, the exhaust control valve opening EXV is made greater than the accelerator-revolution-dependent exhaust control valve opening EXVo by controlling that the greater the accelerator opening decrease rate per unit time and/or the engine revolution decrease rate per unit time. the slower is made the closing speed of the exhaust control valve.

### [Fuel Injection Rate Correction Function]

(1) In the start-up operation state or warm-up operation state, the fuel injection rate FD is made greater than the throttle-dependent injection rate FDo.
(2) In the idling operation state, the fuel injection rate FD is decreased when the engine revolution is higher than the target idling revolution OREV, and the fuel injection rate FD is increased when the engine revolution is lower than the target idling revolution OREV.

### [Throttle Valve Opening Correction Function]

(1) In the start-up operation state or warm-up operation state, the throttle valve opening TH is made greater than the accelerator-dependent throttle valve opening Tho which is commensurate with the accelerator opening ACC.

Next. various control actions using the ECU 50 will be described.

### [Start-up Mode Control]

Referring to FIG. 6, when the control is started by turning on the main switch. water temperature TW is read from the water temperature sensor 53, and initial values such as the ignition timing IGN, fuel injection start timing INJ. fuel injection rate FD, exhaust control valve opening EXV. and throttle valve opening TH commensurate with the water temperature are read from a map shown in FIG. 9, and the actuators work so that the exhaust control valve opening EXV and throttle valve opening TH become the initial values (steps S1 to S4). As seen from FIG. 9, of the initial values, the ignition timing IGN is constant irrespective of the water temperature, while the EXV, [NJ, FD, and TH are increased or advanced with the decrease in the water temperature.

When the ignition key is turned to the on position for the starter motor, at the same time as the starter motor is actuated, the solenoid coil 62 for driving the fuel injection valve, the ignition circuit 63 for the ignition plug, the actuator 61 for the throttle valve, and the actuator 64 for the exhaust control valve work with the initial values as target values (steps S5 to S7), and while the ignition key is turned and held to the on position for the starter motor, the water temperature, ignition timing, fuel injection start timing, etc. are read and set (steps S8, S9, S6, and S7).

When the ignition key is returned and the starter motor switch is turned off in the step S7, the engine revolution REV is read (step S10). detection of the water temperature, reading of the ignition timing, and actuation of the actuators are repeated until the engine revolution exceeds a preset start completion revolution REVo (steps S11 through S14, and S10). When the engine revolution REV exceeds the start-up completion revolution REVo, the start-up mode is complete.

### [Idling Mode]

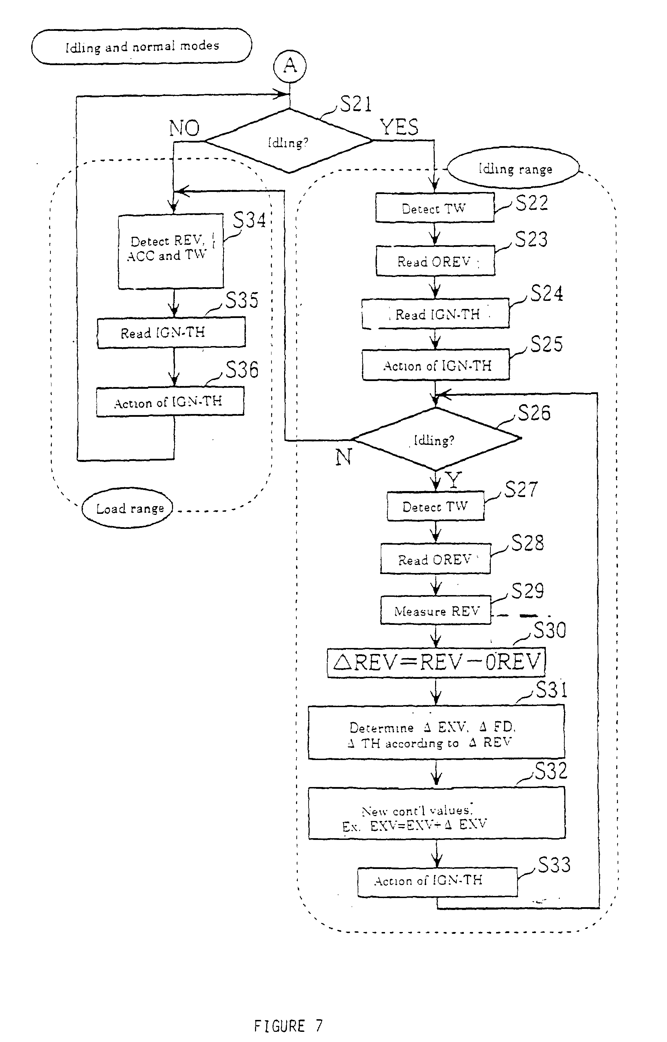

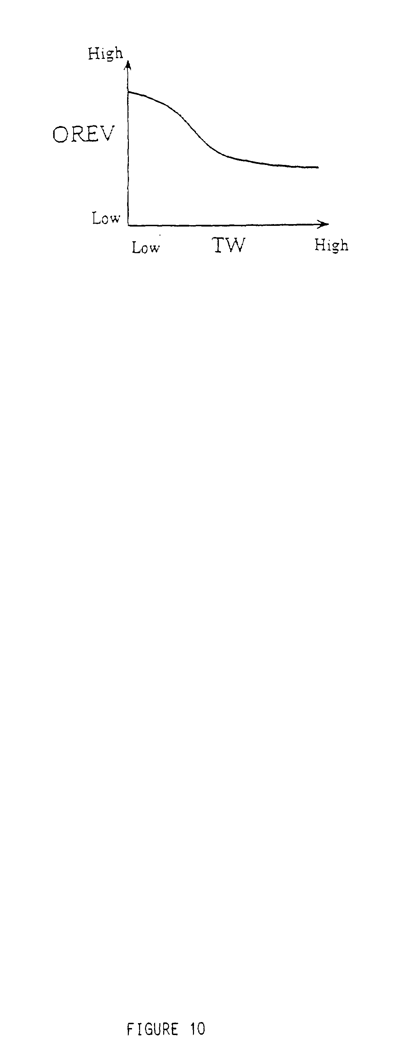

In FIG. 7, when the engine is determined to be in the idling mode with an idling switch turned on and off according to the accelerator opening, the water temperature TW is read, and a target idling revolution commensurate with the water temperature TW is read (steps S21 to S23). Here as shown in FIG. 10, the target idling revolution OREV is set higher, as the engine (water) temperature TW is lower within a specified low temperature range. Thus. when the engine temperature is low in the idling mode. the engine revolution is stabilized by rapidly increasing the idling revolution and the engine temperature.

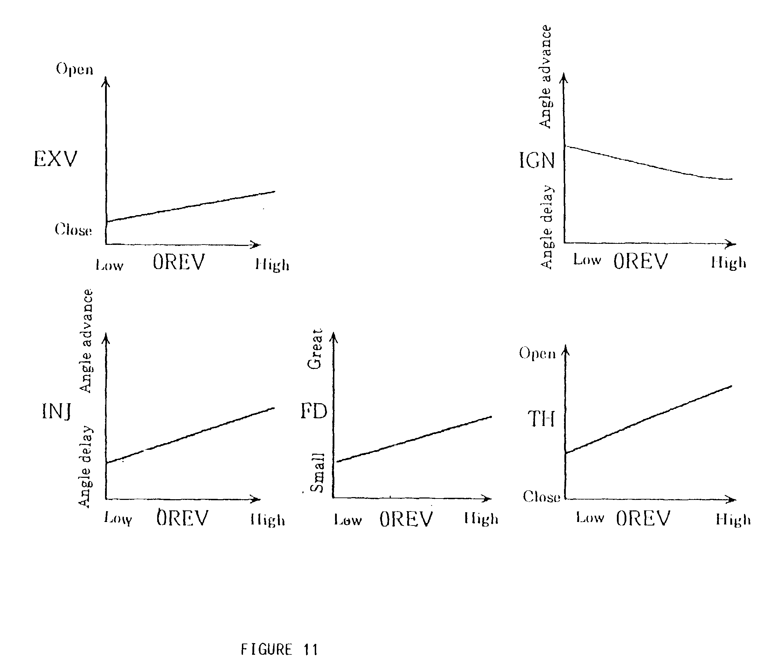

Next, the target values of the exhaust control valve opening EXV, ignition timing IGN, fuel injection start timing INJ. fuel injection rate FD, and throttle valve opening TH commensurate with the target idling revolution OREV are read from the map shown in FIG. 11 (step S24). The actuator 64 for the exhaust control valve, the ignition circuit 63, the solenoid coil 62 for driving the fuel injection valve. and the actuator 61 for the throttle valve work according to the target exhaust control valve opening EXV (step S25).

Here, as seen from FIG. 11. of the above-described control values, the ignition timing IGN is slightly delayed as the target idling revolution OREV increases. The EXV, INJ. FD. and TH are increased or advanced as the target idling revolution is higher, or the engine water temperature TW is lower.

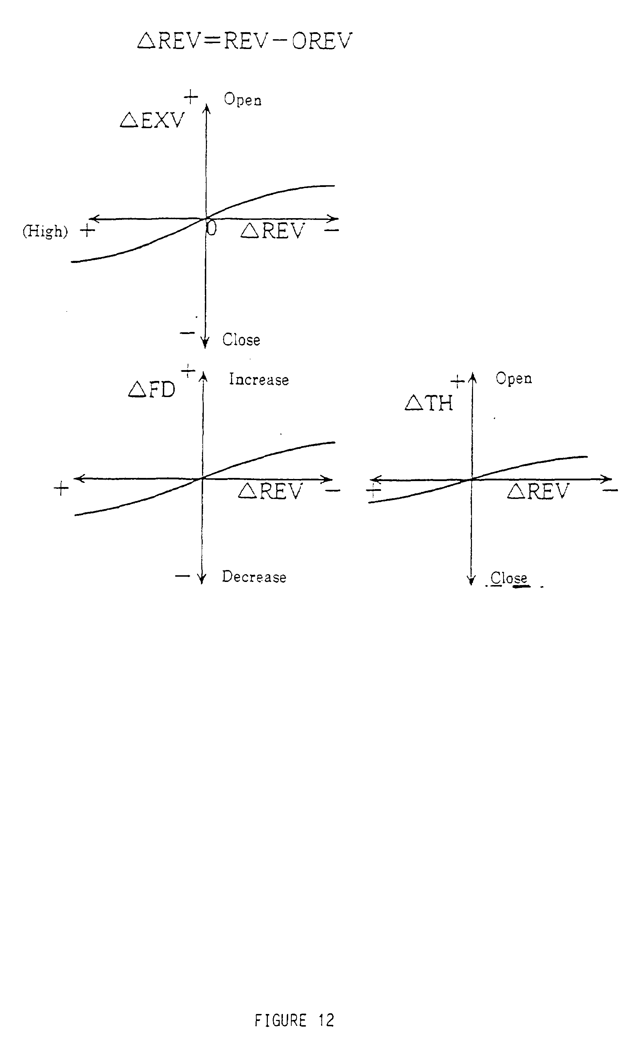

When the engine continues to be in the idling state, a target idling revolution OREV commensurate with the water temperature TW is read again (steps S26 to S28), the engine revolution is read (step S29), the difference Δ REV between the revolution REV and the target idling revolution OREV is determined: an exhaust control valve correction amount Δ EXV commensurate with the Δ REV, a throttle valve opening correction amount Δ TH, and a fuel injection rate correction amount Δ FD are determined from the map shown in FIG. 12 (steps S30 and S31); and the exhaust control valve opening EXV, the throttle valve opening TH, and the fuel injection rate FD are controlled using the new values as corrected with the correction amounts (steps S32, and S33).

Here, as seen from FIG. 12. the above-described correction amounts are set greater on the positive side as the difference Δ REV between the revolution REV and the target idling revolution OREV is greater on the negative side (on the right hand in the drawing). When the Δ REV is greater on the positive side (on the left hand in the drawing), the correction amounts are set greater on the negative side. That is to say, the lower the engine revolution REV than the target value OREV. the more are corrected the exhaust control valve opening and the throttle valve opening on the open side, so that the exhaust gas outflow resistance and the intake air inflow resistance are reduced, the fuel injection rate is corrected to the greater side and the engine revolution is increased toward the target value.

In the step S26 described above, if the operation is determined to be out of the idling state because of an opening action of the accelerator or the like. then the engine revolution REV. the acceleration opening ACC, and the water temperature TW are read; control target values of an ignition timing, an exhaust control valve opening, and a fuel injection rate commensurate with the accelerator opening and the engine revolution are read from a map for the normal operation state, and the actuators are actuated according to the read values (steps S35 and S36).

### [Rapid Acceleration Mode]

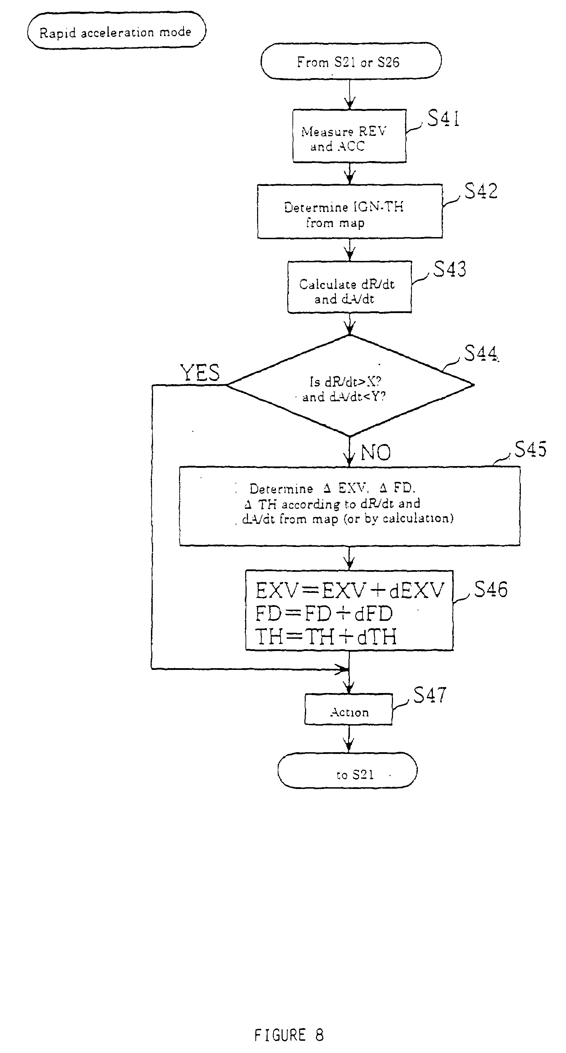

When the operation is determined not to be in the idling state in the step S21 or S26. the control of FIG. 8 is carried out instead of the steps S34 to S36 of FIG. 7 so that, in addition to the operation control for the normal operation, the operation control for the rapid acceleration operation is carried out. That is to say the engine revolution REV and the accelerator opening ACC are read; an ignition timing IGN, an exhaust control valve opening EXV, a fuel injection start timing INJ, a fuel injection rate FD, and a throttle valve opening TH commensurate with the engine revolution REV and accelerator opening ACC are read from the normal operation map (steps S41 and S42). At the same time, an increasing speed dR/dt of the engine REV and an increasing speed dA/dt of the accelerator opening ACC are calculated, and the calculated values are compared with reference increasing speed values X and Y to determine whether the operation is in the normal operation state or in the rapid acceleration operation state (steps S43 and S44).

When at least one of the two calculated values is smaller than the reference value, the operation is determined to be in the normal state, and the process goes to the step S47 to actuate the various actuators so that the values of the ignition timing, the exhaust control valve opening, the fuel injection timing, the fuel injection rate, and the throttle opening become those read commensurate with the engine revolution and the throttle opening. In the step S47, the same action as that shown in FIG 7 is carried out. From the steps S41 to S44. and jumping to the step S47 constitute the normal operation mode.

On the other hand, when the two calculated values are greater than the reference value, the operation is determined to be in the rapid acceleration state. An exhaust control valve opening correction amount Δ EXV. a fuel injection rate correction amount Δ FD, and a throttle opening correction amount Δ TH commensurate with the engine revolution increasing speed dR/dt and the accelerator opening increasing speed dA/dt are obtained from the maps shown in FIGs. 13 through 15. the obtained correction amounts are added to the exhaust control valve opening and others obtained in the step S42 to obtain new control target values, the actuators are actuated so that the target values are reached (steps S45 through 47), and the process goes to the step S21 of FIG. 7. That is to say, in addition to the steps S41 through S44 (also serving as the normal mode), the steps S45 through S47 constitute the rapid acceleration mode.

Here, when the ignition key is turned off. the engine is immediately stopped whether the engine operation is in the mode of starting, idling, normal, or rapid acceleration.

As shown in FIG. 13, the exhaust control valve opening correction amount Δ EXV is increased in a quadratic tendency as the accelerator opening increasing speed dA/dt increases. More specifically, the lower the accelerator opening ACC from which the rapid acceleration is made (shown with the broken line), the more rapidly is increased the Δ EXV.

Also. as shown FIG. 14, the exhaust control valve opening correction amount Δ EXV is increased more as the engine revolution increasing speed dR/dt increases. More specifically, the lower the engine REV from which the rapid acceleration is made (shown with the broken line), the more rapidly is increased the Δ EXV.

As shown in FIG. 15, the fuel injection rate correction amount Δ FD and the throttle opening correction amount Δ TH are set to greater values as the exhaust control valve opening correction amount Δ EXV is greater. The increase in the exhaust control valve opening EXV reduces the exhaust gas discharge resistance. The increase in the throttle valve opening TH reduces the fresh charge inflow resistance and increases the fuel injection rate FD so that the engine revolution increases immediately. Here, when the accelerator opening is rapidly increased or decreased, the engine revolution changes even after the change in the accelerator opening is finished. This state also belongs to the transient state according to the invention. That is to say, even after the change in the accelerator opening is completed, if the absolute value of the stored change rate per unit time dA/dt and/or the absolute value of the engine revolution change rate per unit time dR/dt is greater than the reference value, the operation is deemed as in the transient state of rapid acceleration or deceleration and controlled accordingly as described above.

With the present embodiment described above, since the exhaust control valve 43 is located downstream of the confluence point in the confluence passage 40 where all the independent passages 42 join together, exhaust gas from any cylinder passes through the exhaust control valve 43 before being discharged. As a result, the exhaust passage resistance may be variably controlled in any mode of start-up. idling, rapid acceleration, or rapid deceleration with a single exhaust control valve 43 so that the pressure and temperature in all the cylinders at the beginning of compression may be maintained high, irregular combustion is restricted, and the combustion is stabilized.

Also with this embodiment, in the idling operation state, it is arranged that the exhaust control valve opening EXV is made smaller than the accelerator-dependent exhaust control valve opening set on the basis of the accelerator opening when the engine revolution REV is higher than the target idling revolution OREV. and vice versa. As a result, the engine revolution may be maintained at the target revolution.

That is to say, when the engine revolution REV is higher than the target idling revolution OREV for example, the exhaust control valve opening EXV is made smaller than the accelerator-dependent exhaust control valve opening, so that the exhaust gas flow resistance is increased, the intake air amount is decreased, the fuel injection rate FD is decreased, the amount of generated heat is decreased, and the engine revolution is decreased. On the contrary, when the engine revolution REV is lower than the target idling revolution OREV, the exhaust control valve opening EXV is made greater than the accelerator-dependent exhaust control valve opening, so that the exhaust gas flow resistance is decreased, the intake air amount is increased, the fuel injection rate FD is increased, the amount of generated heat is increased, and the engine revolution is increased. In this way, the engine revolution is maintained at the target idling revolution.

Also. in the transient operation state, since the exhaust control valve opening EXV is made greater than the accelerator-revolution-dependent exhaust control valve opening which is set on the basis of the accelerator opening and the engine revolution, combustion state of good fuel economy and high stability is obtained in the normal operation: and higher acceleration performance is obtained while avoiding abnormal temperature rise and stall of the engine with the exhaust control valve in the transient operation state.

That is to say. since the exhaust control valve 43 at the time of rapid acceleration is opened to an opening greater than that for the same accelerator opening and the engine revolution of the normal operation, the exhaust gas flow passage resistance decreases, the intake air amount increases, the engine revolution increases immediately, and the acceleration performance improves. At the time of rapid deceleration, since the exhaust control valve 43 is opened to an opening greater than that for the same accelerator opening and the engine revolution of the normal operation, the high temperature exhaust gas outflow is not hindered and therefore temperature rise and stall of the engine are avoided.

Also with this embodiment, the greater the increase rates dA/dt and dR/dt per unit time respectively of the accelerator opening ACC and the engine revolution REV, the greater is made the increment Δ EXVof the exhaust control valve opening EXV. Furthermore, the smaller the accelerator opening ACC and the engine revolution in an operation range where the rapid acceleration occurs, the greater is made the increment Δ EXVof the exhaust control valve opening EXV. As a result, the rapid acceleration performance is all the more improved.

Furthermore, the greater the increase rates dA/dt and dR/dt per unit time respectively of the accelerator opening ACC and the engine revolution REV, the slower is made the closing speed of the exhaust control valve. This makes it possible to make the exhaust control valve opening greater than the accelerator-revolution-dependent exhaust control valve opening so that the high temperature exhaust gas outflow is not hindered and therefore temperature rise and stall of the engine are avoided more securely.

In the start-up operation state and the warm-up operation state, the exhaust control valve opening EXV is made to the opening which is greater than the accelerator-revolution-dependent exhaust control valve opening. As a result, in the normal operation state with a low load, the exhaust passage cross-sectional area is throttled with the exhaust control valve, the pressure and the in-cylinder temperature at the beginning of compression is maintained high. and irregular combustion is restricted. In the start-up operation state and the warm-up operation state, the exhaust passage cross-sectional area is increased according to the increase in the exhaust control valve opening, the fresh intake air amount is increased, the fuel injection rate is increased accordingly, the engine revolution is increased rapidly, loads on the starter motor and the battery are reduced. and the warm-up time is shortened.

Furthermore, the lower the engine cooling water temperature TW, the greater is made the increment Δ EXV of the exhaust control valve opening EXV in the start-up and the warm-up operation states. As a result, the engine revolution is rapidly increased even when the engine temperature is low, and the warm-up time is shortened.

Furthermore, in the start-up operation state and the warm-up operation state, the throttle valve opening is made greater than the accelerator-dependent exhaust control valve opening commensurate with the accelerator opening. As a result, the increase in the exhaust control valve opening and the increase in the throttle valve opening work together so that the fresh charge amount is securely increased, the engine revolution in the start-up operation is securely increased, and the warm-up time in the warm-up operation is more securely shortened.

## Claims

1. Method for controlling the operation of an internal combustion engine (6), said engine (6) comprising an air intake system having a throttle valve (31), an exhaust system having an exhaust control valve (43), a fuel injection means (49), an accelerator means, and a control device for controlling engine components in response to engine operating conditions detected, such as engine speed and/or engine load, said method comprising the steps of:
detecting an engine operating state,
determining whether said engine operating state is a stationary operating state during which the engine operating conditions are constant or a transient state which comprises at least rapid acceleration,
controlling an opening degree of said exhaust control valve (43) toward an opening degree corresponding to the engine speed and/or engine load responsive opening degree of the exhaust control valve (43) during the stationary operating state, and controlling said opening degree of said exhaust control valve (43) to a greater opening degree during said transient operating state, compared to the stationary operating state conditions, for the same engine speed and/or engine load.

2. Method for controlling the operation of an internal combustion engine (6) according to claim 1, **characterized in that** said transient state further comprises rapid deceleration.

3. Method for controlling the operation of an internal combustion engine (6) according to claim 1 or 2, wherein said transient operation state further comprising start-up and/or warm-up.

4. Method for controlling the operation of an internal combustion engine (6) according to at least one of the preceding claims 1 to 3, wherein said engine operating conditions are detected by sensor means comprising a revolution sensor (51), an accelerator opening sensor (52) and optionally a water temperature sensor (53), a crank angle sensor (54), and exhaust pressure sensor (55), a crank chamber pressure sensor (56), an ambient pressure sensor (57) and an ambient temperature sensor (58).

5. Method for controlling the operation of an internal combustion engine (6) according to at least one of the preceding claims 1 to 4, wherein when the operating state detection means detects the rapid acceleration state, the exhaust control valve opening degree is controlled such that the greater the increase rate per unit time of the accelerator opening and/or the engine revolution, the greater the increment is made of the exhaust control valve opening.

6. Method for controlling the operation of an internal combustion engine (6) according to at least one of the preceding claims 1 to 5, wherein the exhaust control valve opening degree is controlled such that the smaller an accelerator opening and/or the engine speed in an operating range, the greater the exhaust valve opening increment is made.

7. Method for controlling the operation of an internal combustion engine (6) according to at least one of the preceding claims 1 to 6, wherein when the operation state detection means detects the rapid declaration state, the exhaust control valve opening degree is controlled to an opening greater than that compared to the stationary operating state condition for the same engine speed and/or engine load by delaying the closing speed of the exhaust control valve (43) in proportion to the magnitude of the decrease rate per unit time of the engine speed and/or the engine load.

8. Method for controlling the operation of an internal combustion engine (6) according to at least one of the preceding claims 4 to 7, wherein the exhaust control valve opening degree is controlled such that the lower the engine cooling water temperature (TW), the greater the increment is made of the exhaust control valve opening in the start-up operating state or in the warm-up operating state.

9. Method for controlling the operation of an internal combustion engine (6) according to at least one of the preceding claims 1 to 8, wherein a fuel injection rate correction means increases the fuel injection rate in the start-up or warm-up operating state to a rate greater than that compared to the stationary operating state conditions for the same engine speed and/or engine load.

10. Method for controlling the operation of an internal combustion engine (6) according to claim 9, wherein a throttle valve opening correction means increases the throttle valve opening in the start-up or warm-up operating state to an opening greater than that compared to the stationary operating state conditions for the same engine speed and/or engine load.

11. Method for controlling the operation of an internal combustion engine (6) according to at least one of the preceding claims 1 to 10, wherein the exhaust control valve opening degree is controlled to that according to the stationary operating state, to a start-up exhaust control valve opening which is greater than the opening degree of said stationary operating state opening degree in the start-up operating state, and to a warm-up exhaust control valve opening degree which is between the stationary opening state opening degree and the start-up exhaust control valve opening degree.

12. Method for controlling the operation of an internal combustion engine (6) according to claim 11, wherein the exhaust control valve opening degree is controlled to the opening degree corresponding to the engine speed and/or engine load responsive opening degree of the exhaust control valve (43) during the stationary operating state, to a start-up exhaust control valve opening degree which is greater than the stationary operating state opening degree in the start-up operating state, and to a warm-up exhaust control valve opening degree which is between the stationary operating state opening degree and the start-up exhaust control valve opening degree.

13. Method for controlling the operation of an internal combustion engine (6) according to at least one of the preceding claims 1 to 12, wherein said control device (50) comprising pre-stored maps for controlling said engine operation.

14. Method for controlling the operation of an internal combustion engine (6) according to at least one of the preceding claims 1 to 13, wherein said internal combustion engine is an in-cylinder injection type two-stroke cycle internal combustion engine.

15. Internal combustion engine (6) comprising an air intake system having a throttle valve (31), an exhaust system having an exhaust control valve (43), a fuel injection means (49), an accelerator means, and a control device (50) for controlling engine components in response to engine operating conditions detected, such as engine speed and/or engine load, said control device (50) being adapted to detect an engine operating state,
to determine whether said engine operating state is a stationary operating state during which the engine operating conditions are constant or a transient state, to control an opening degree of said exhaust control valve (43) toward an opening degree corresponding to the engine speed and/or engine load responsive opening degree of the exhaust control valve (43) during the stationary operating state, **characterized in that** said control device (50) is adapted to determine whether said transient state at least is a rapid acceleration and to control said opening degree of said exhaust control valve (43) to a greater opening degree during said transient operating state, compared to the stationary operating state conditions, for the same engine speed and/or engine load,

16. Internal combustion engine (6) according to claim 15, **characterized in that** said control device (50) is further adapted to determine whether said transient state further comprises rapid deceleration.

17. Internal combustion engine (6) according to claim 15 or 16, wherein said transient operation state further comprising start-up and/or warm-up.

18. Internal combustion engine (6) according to at least one of the preceding claims 15 to 17, wherein said engine operating conditions are detectable by sensor means comprising a revolution sensor (51), an accelerator opening sensor (52) and optionally a water temperature sensor (53), a crank angle sensor (54), and exhaust pressure sensor (55), a crank chamber pressure sensor (56), an ambient pressure sensor (57) and ambient temperature sensor (58).

19. Internal combustion engine (6) according at least one of the preceding claims 15 to 18, wherein when the operating state detection means detects the rapid acceleration state, the exhaust control valve opening degree is controlled such that the greater the increase rate per unit time of the accelerator opening and/or the engine revolution, the greater the increment is made of the exhaust control valve opening.

20. Internal combustion engine (6) according to at least one of the preceding claims 15 to 19, wherein the exhaust control valve opening degree is controllable such that the smaller an accelerator opening and/or the engine speed in an operating range, the greater the exhaust valve opening increment is made.

21. Internal combustion engine (6) according at least one of the preceding claims 15 to 20, wherein when the operation state detection means detects the rapid declaration state, the exhaust control valve opening degree is controllable to an opening greater than that compared to the stationary operating state condition for the same engine speed and/or engine load by delaying the closing speed of the exhaust control valve (43) in proportion to the magnitude of the decrease rate per unit time of the engine speed and/or the engine load.

22. Internal combustion engine (6) according to claim 20 or 21, wherein the exhaust control valve opening degree is controllable such that the lower the engine cooling water temperature (TW), the greater the increment is made of the exhaust control valve opening in the start-up operation state or in the warm-up operating state.

23. Internal combustion engine (6) according to at least one of the preceding claims 15 to 22, a fuel injection rate correction means increases the fuel injection rate in the start-up or warm-up operating state to a rate greater than that compared to the stationary operating state conditions for the same engine speed and/or engine load.

24. Internal combustion engine (6) according to claim 23, wherein a throttle valve opening correction means increases the throttle valve opening degree in the start-up or warm-up operating state to an opening greater than that compared to the stationary operating state conditions for the same engine speed and/or engine load.

25. Internal combustion engine (6) according to at least one of the preceding claims 15 to 24, wherein the exhaust control valve opening degree is controllable to that according to the stationary operating state, to a start-up exhaust control valve opening which is greater than the opening degree of said stationary operating state opening degree in the start-up operating state, and to a warm-up exhaust control valve opening degree which is between the stationary opening state opening degree and the start-up exhaust control valve opening degree.

26. Internal combustion engine (6) according to claim 25, wherein the exhaust control valve opening degree is controlled to the opening degree corresponding to the engine speed and/or engine load responsive opening degree of the exhaust control valve (43) during the stationary operating state, to a start-up exhaust control valve opening degree which is greater than the stationary operating state opening degree in the start-up operating state, and to a warm-up exhaust control valve opening degree which is between the stationary operating state opening degree and the start-up exhaust control valve opening degree.

27. Internal combustion engine (6) according to at least one of the preceding claims 15 to 26, wherein said control device (50) comprising pre-stored maps for controlling said engine operation.

28. Internal combustion engine (6) according to at least one of the preceding claims 15 to 27, wherein said internal combustion engine is an in-cylinder injection type two-stroke cycle internal combustion engine.

## Patentansprüche

1. Verfahren zum Steuern des Betriebes einer Brennkraftmaschine (6), wobei der Motor (6) ein Lufteinlaßsystem aufweist, das ein Drosselventil (31) hat, ein Auslaßsystem, das ein Abgas-Steuerventil (43) hat, eine Kraftstoffeinspritzeinrichtung (49), eine Beschleunigungseinrichtung und eine Steuervorrichtung zum Steuern der Motorkomponenten in Abhängigkeit von erfaßten Motorbetriebsbedingungen, wie z.B. Motordrehzahl und/oder Motorlast, wobei das Verfahren die Schritte aufweist:
Erfassen eines Motorbetriebszustandes,
Bestimmen, ob der Motorbetriebszustand ein stationärer Betriebszustand ist, während dem die Motorbetriebsbedingungen konstant sind, oder ein Übergangszustand ist, der zumindest eine schnelle Beschleunigung aufweist,
Steuern eines Öffnungsgrades des Abgas-Steuerventiles (43) in Richtung eines Öffnungsgrades, der einem motordrehzahl- und/oder motorlastabhängigen Öffnungsgrad des Abgas-Steuerventiles (43) während des stationären Betriebszustandes entspricht und
Steuern des Öffnungsgrades des Abgas-Steuerventiles (43) auf einen größeren Öffnungsgrad während eines vorübergehenden Betriebszustandes im Vergleich zu den stationären Betriebszustandsbedingungen für dieselbe Motordrehzahl und/oder Motorlast.

2. Verfahren zum Steuern des Betriebes einer Brennkraftmaschine (6) nach Anspruch 1, **dadurch gekennzeichnet, daß** der Übergangszustand außerdem eine rapide Abbremsung aufweist.

3. Verfahren zum Steuern des Betriebes einer Brennkraftmaschine (6) nach Anspruch 1 oder 2, wobei der Übergangszustand außerdem aufweist einen Startvorgang und/oder ein Aufwärmvorgang ist.

4. Verfahren zum Steuern des Betriebes einer Brennkraftmaschine (6) nach zumindest einem der vorhergehenden Ansprüche 1 bis 3, wobei die Motorbetriebsbedingungen durch eine Sensoreinrichtung erfaßt werden, enthaltend einen Drehzahlsensor (51), einen Beschleuniger-Öffnungssensor (52) und wahlweise einen Wassertemperatursensor (53), einen Kurbelwinkelsensor (54) oder einen Abgasdrucksensor (55), einen Kurbelkammer-Drucksensor (56), einen Umgebungsdrucksensor (57) oder einen Umgebungstemperatursensor (58).

5. Verfahren zum Steuern des Betriebes einer Brennkraftmaschine (6) nach zumindest einem der vorhergehenden Ansprüche 1 bis 4, wobei dann, wenn die Betriebszustands-Erfassungseinrichtung einen rapiden Beschleunigungszustand erfaßt, der Öffnungsgrad des Abgas-Steuerventiles so gesteuert wird, daß, je größer die Steigerungsrate pro Zeiteinheit der Beschleunigeröffnung und/oder der Motordrehzahl ist, desto größer wird die Zunahme der Abgas-Steuerventilöffnung gemacht.

6. Verfahren zum Steuern des Betriebes einer Brennkraftmaschine (6) nach zumindest einem der vorhergehenden Ansprüche 1 bis 5, wobei der Öffnungsgrad des Abgas-Steuerventiles so gesteuert wird, daß, je kleiner eine Beschleunigeröffnung und/oder die Motordrehzahl in einem Betriebsbereich ist, desto größer die Zunahme der Öffnung des Abgasventiles gemacht wird.

7. Verfahren zum Steuern des Betriebes einer Brennkraftmaschine (6) nach zumindest einem der vorhergehenden Ansprüche 1 bis 6, wobei dann, wenn die Betriebszustands-Erfassungseinrichtung einen rapiden Abbremszustand erfaßt, der Öffnungsgrad des Abgas-Steuerventiles auf eine Öffnung größer als jene gesteuert wird, wie sie im Vergleich zu der stationären Betriebszustandsbedingung für dieselbe Motordrehzahl und/oder Motorbelastung wäre, durch Verzögern der Schließgeschwindigkeit des Abgas-Steuerventiles (43) im Verhältnis zur Größe der Verminderungsrate pro Zeiteinheit der Motordrehzahl und/oder der Motorlast.

8. Verfahren zum Steuern des Betriebes einer Brennkraftmaschine (6) nach zumindest einem der vorhergehenden Ansprüche 4 bis 7, wobei der Öffnungsgrad des Abgas-Steuerventiles so gesteuert wird, daß, je niedriger die Motorkühlwassertemperatur (TW) ist, desto größer die Zunahme der Auslaß-Steuerventilöffnung während des Start-Betriebszustandes oder in dem Aufwärm-Betriebszustand gemacht wird.

9. Verfahren zum Steuern des Betriebes einer Brennkraftmaschine (6) nach zumindest einem der vorhergehenden Ansprüche 1 bis 8, wobei eine Kraftstoffeinspritzungsraten-Korrektureinrichtung die Kraftstoffeinspritzrate während des Start- oder Aufwärm-Betriebszustandes auf eine Rate erhöht, die größer ist als jene, verglichen mit den stationären Betriebszustandsbedingungen für dieselbe Motordrehzahl und/oder Motorlast.

10. Verfahren zum Steuern des Betriebes einer Brennkraftmaschine (6) nach Anspruch 9, wobei eine Drosselventilöffnungs-Korrektureinrichtung die Drosselventilöffnung in dem Start- oder Aufwärmbetriebszustand auf eine Öffnung erhöht, die größer ist als jene, wie sie wäre im Vergleich zu den stationären Betriebszustandsbedingungen für dieselbe Motordrehzahl und/oder Motorlast.

11. Verfahren zum Steuern des Betriebes einer Brennkraftmaschine (6) nach zumindest einem der vorhergehenden Ansprüche 1 bis 10, wobei der Öffnungsgrad des Abgas-Steuerventiles auf denjenigen gemäß dem stationären Betriebszustand gesteuert wird, auf einen Start-Öffnungsgrad des Abgas-Steuerventiles im Startbetriebszustand, der größer ist als der Öffnungsgrad des stationären Betriebszustandes, und auf einen Aufwärm-Öffnungsgrad des Abgas-Steuerventiles, der zwischen dem Öffnungsgrad des stationären Betriebszustandes und dem Start-Öffnungsgrad des Abgas-Steuerventiles liegt.

12. Verfahren zum Steuern des Betriebes einer Brennkraftmaschine (6) nach Anspruch 11, wobei der Öffnungsgrad des Abgas-Steuerventiles auf den Öffnungsgrad entsprechend dem motordrehzahl- und/oder motorlastabhängigen Öffnungsgrad des Abgas-Steuerventiles (43) während des stationären Betriebszustandes gesteuert wird, auf einen Start-Öffnungsgrad des Abgas-Steuerventiles in dem Start-Betriebszustand, der größer ist als der Öffnungsgrad des stationären Betriebszustandes und auf einen Aufwärm-Öffnungsgrad des Abgas-Steuerventiles, der zwischen dem Öffnungsgrad des stationären Betriebszustandes und dem Start-Öffnungsgrad des Abgas-Steuerventiles liegt.

13. Verfahren zum Steuern des Betriebes einer Brennkraftmaschine (6) nach zumindest einem der vorhergehenden Ansprüche 1 bis 12, wobei die Steuervorrichtung (50) vorgespeicherte Kennfelder zum Steuern des Motorbetriebes enthält.

14. Verfahren zum Steuern des Betriebes einer Brennkraftmaschine (6) nach zumindest einem der vorhergehenden Ansprüche 1 bis 13, wobei die Brennkraftmaschine eine Zweitakt-Brennkraftmaschine vom In-Zylinder-Einspritztyp ist.

15. Brennkraftmaschine (6) mit einem Lufteinlaßsystem, das ein Drosselventil (31) enthält, einem Auslaßsystem, das ein Abgas-Steuerventil (43) enthält, eine Kraftstoffeinspritzeinrichtung (49), eine Beschleunigereinrichtung und eine Steuervorrichtung (50) zum Steuern der Motorkomponenten in Abhängigkeit von erfaßten Motorbetriebsbedingungen, wie z.B. Motordrehzahl und/oder Motorlast, wobei die Steuervorrichtung (50) vorgesehen ist, um einen Motorbetriebszustand zu erfassen,
zu bestimmen, ob der Motorbetriebszustand ein stationärer Betriebszustand ist, während dem die Motorbetriebsbedingungen konstant sind, oder ein Übergangszustand ist, um einen Öffnungsgrad des Abgas-Steuerventiles (43) in Richtung eines Öffnungsgrades zu steuern, der dem motordrehzahl- und/oder motorlastabhängigen Öffnungsgrad des Abgas-Steuerventiles während des stationären Betriebszustandes entspricht, **dadurch gekennzeichnet, daß** die Steuervorrichtung (50) vorgesehen ist, um zu bestimmen, ob der Übergangszustand zumindest eine rasche Beschleunigung ist und den Öffnungsgrad des Abgas-Steuerventiles (43) auf einen größeren Öffnungsgrad während des vorübergehenden Betriebszustandes im Vergleich zu den stationären Betriebszustandsbedingungen für dieselbe Motordrehzahl und/oder Motorlast zu steuern.

16. Brennkraftmaschine (6) nach Anspruch 15, **dadurch gekennzeichnet, daß** die Steuervorrichtung (50) weiter vorgesehen ist, zu bestimmen, ob der Übergangszustand außerdem eine rasche Abbremsung aufweist.

17. Brennkraftmaschine (6) nach Anspruch 15 oder 16, wobei der vorübergehende Betriebszustand außerdem einen Start- und/oder Aufwärmvorgang aufweist.

18. Brennkraftmaschine (6) nach zumindest einem der vorhergehenden Ansprüche 15 bis 17, wobei die Motorbetriebsbedingungen durch eine Sensoreinrichtung erfaßbar sind, aufweisend einen Drehzahlsensor (51), einen Beschleuniger-Öffnungssensor (52) und wahlweise einen Wassertemperatursensor (53), einen Kurbelwinkelsensor (54) und einen Abgas-Drucksensor (55), einen Kurbelkammer-Drucksensor (56), einen Umgebungsdrucksensor (57), oder einen Umgebungstemperatur-Sensor (58).

19. Brennkraftmaschine (6) nach zumindest einem der vorhergenden Ansprüche 15 bis 18, wobei dann, wenn die Betriebszustands-Erfassungseinrichtung den rapiden Beschleunigungszustand erfaßt, der Öffnungsgrad des Auslaß-Steuerventiles so gesteuert wird, daß je größer die Steigerungsrate pro Zeiteinheit der Beschleunigeröffnung und/oder der Motordrehzahl ist, desto größer die Zunahme der Abgas-Steuerventilöffnung gemacht wird.

20. Brennkraftmaschine (6) nach zumindest einem der vorhergenden Ansprüche 15 bis 19, wobei der Öffnungsgrad des Abgas-Steuerventiles derart steuerbar ist, daß je kleiner eine Beschleunigeröffnung und/oder die Motordrehzahl in einem Betriebsbereich sind, desto größer die Zunahme der Öffnung des Abgasventiles gemacht wird.

21. Brennkraftmaschine (6) nach zumindest einem der vorhergehenden Ansprüche 15 bis 20, wobei dann, wenn die Betriebszustands-Erfassungseinrichtung den raschen Abbremszustand erfaßt, der Öffnungsgrad des Abgas-Steuerventiles auf eine Öffnung steuerbar ist, die größer ist als jene, wie sie im Vergleich zu der stationären Betriebszustandsbedingung für dieselbe Motordrehzahl und/oder Motorlast wäre, durch Verzögern der Schließgeschwindigkeit des Auslaß-Steuerventiles (43) im Verhältnis zur Größe der Verminderungsrate der Motordrehzahl und/oder der Motorlast pro Zeiteinheit.

22. Brennkraftmaschine (6) nach Anspruch 20 oder 21, wobei der Öffnungsgrad des Abgas-Steuerventiles derart steuerbar ist, daß, je niedriger die Motorkühlwassertemperatur (TW) ist, desto größer die Zunahme der Öffnung des Abgas-Steuerventiles in dem Start-Betriebszustand oder in dem Aufwärm-Betriebszustand gemacht wird.

23. Brennkraftmaschine (6) nach zumindest einem der vorhergehenden Ansprüche 15 bis 22, wobei eine Korrektureinrichtung für die Kraftstoffeinspritzrate die Kraftstoffeinspritzrate in dem Start- oder Aufwärm-Betriebszustand auf eine Rate erhöht, die größer ist als jene im Vergleich zu den stationären Betriebszustandsbedingungen für dieselbe Motordrehzahl und/oder Motorlast.

24. Brennkraftmaschine (6) nach Anspruch 23, wobei eine Korrektureinrichtung für die Drosselventilöffnung den Öffnungsgrad des Drosselventiles in dem Start- oder Aufwärm-Betriebszustand auf eine Öffnung erhöht, die größer ist als jene im Vergleich zu jener unter stationären Betriebszustandsbedingungen für dieselbe Motordrehzahl und/oder Motorlast.

25. Brennkraftmaschine (6) nach zumindest einem der vorhergehenden Ansprüche 15 bis 24, wobei der Öffnungsgrad des Abgas-Steuerventiles auf denjenigen gemäß des stationären Betriebszustandes steuerbar ist, auf eine Start-Abgas-Steuerventilöffnung, die in der Start-Beetriebsbedingung größer ist als der Öffnungsgrad während des stationären Betriebszustandes, und auf einen Aufwärm-Öffnungsgrad des Abgas-Steuerventiles, der zwischen dem Öffnungsgrad des stationären Betriebszustandes und dem Öffnungsgrad des Abgas-Steuerventiles während des Startes liegt.

26. Brennkraftmaschne (6) nach Anspruch 25, wobei der Öffnungsgrad des Abgas-Steuerventiles auf einen Öffnungsgrad entsprechend dem motordrehzahl- und/oder motorlastabhängigen Öffnungsgrad des Auslaß-Steuerventiles (43) während des stationären Betriebszustandes, auf einen Start-Öffnungsgrad des Abgas-Steuerventiles in der Start-Betriebsbedingung steuerbar ist, der größer ist als der Öffnungsgrad des stationären Betriebszustandes und auf einen Öffnungsgrad des Abgas-Steuerventiles während des Aufwärmens, der zwischen dem Öffnungsgrad des stationären Betriebszustandes und dem Öffnungsgrad des Abgas-Steuerventiles während des Starts liegt.

27. Brennkraftmaschine (6) nach zumindest einem der vorhergehenden Ansprüche 15 bis 26, wobei die Steuervorrichtung (50) vorgespeicherte Kennfelder zur Steuerung des Motorbetriebes aufweist.

28. Brennkraftmaschine (6) nach zumindest einem der vorhergehenden Ansprüche 15 bis 27, wobei die Brennkraftmaschine eine Zweitakt-Brennkraftmaschine mit In-Zylinder-Einspritzung ist.

## Revendications

1. Procédé de commande du fonctionnement d'un moteur à combustion interne (6), ledit moteur (6) comprenant un système d'admission d'air ayant une soupape d'étranglement (31), un système d'échappement ayant une soupape de commande de l'échappement (43), un moyen d'injection de carburant (49), un moyen formant accélérateur, et un dispositif de commande pour commander les composantes du moteur en réaction aux conditions de fonctionnement du moteur détectées, telles que la vitesse du moteur et/ou la charge du moteur, ledit procédé comprenant les étapes de :
détection d'un état de fonctionnement du moteur,
détermination si ledit état de fonctionnement du moteur est un état de fonctionnement stationnaire pendant lequel les conditions de fonctionnement du moteur sont constantes ou un état transitoire qui comprend au moins une accélération rapide,
commande d'un degré d'ouverture de ladite soupape de commande de l'échappement (43) vers un degré d'ouverture correspondant à la vitesse du moteur et/ou un degré d'ouverture sensible à la charge du moteur de la soupape de commande de l'échappement (43) pendant l'état de fonctionnement stationnaire, et de commande dudit degré d'ouverture de ladite soupape de commande de l'échappement (43) à un degré d'ouverture plus grand pendant ledit état de fonctionnement transitoire, comparé aux conditions d'état de fonctionnement stationnaire, pour la même vitesse de moteur et/ou charge de moteur.

2. Procédé de commande du fonctionnement d'un moteur à combustion interne (6) selon la revendication 1, **caractérisé en ce que** ledit état transitoire comprend en outre une décélération rapide.

3. Procédé de commande du fonctionnement d'un moteur à combustion interne (6) selon la revendication 1 ou 2, dans lequel ledit état de fonctionnement transitoire comprend en outre une période de démarrage et/ou de préchauffage.

4. Procédé de commande du fonctionnement d'un moteur à combustion interne (6) selon au moins l'une des revendications précédentes 1 à 3, dans lequel lesdites conditions de fonctionnement du moteur sont détectées par des moyens formant détecteurs comprenant un détecteur de rotation (51), un détecteur d'ouverture de l'accélérateur (52) et en option un détecteur de température de l'eau (53), un détecteur de l'angle de la manivelle (54), et un détecteur de la pression d'échappement (55), un détecteur de la pression du carter-moteur (56), un détecteur de la pression ambiante (57) et un détecteur de la température ambiante (58).

5. Procédé de commande au fonctionnement d'un moteur à combustion interne (6) selon au moins l'une des revendications précédentes 1 à 4, dans lequel lorsque les moyens de détection de l'état de fonctionnement détectent l'état d'accélération rapide, le degré d'ouverture de la soupape de commande de l'échappement est commandé de manière telle que plus le taux d'augmentation par temps unitaire de l'ouverture de l'accélérateur et/ou de la rotation du moteur est grand, plus l'augmentation de l'ouverture de la soupape de commande de l'échappement est établie grande.

6. Procédé de commande du fonctionnement d'un moteur à combustion interne (6) selon au moins l'une des revendications précédentes 1 à 5, dans lequel le degré d'ouverture de la soupape de commande de l'échappement est commandé de manière telle que plus l'ouverture de l'accélérateur et/ou la vitesse du moteur est petite dans une plage de fonctionnement, plus l'augmentation de l'ouverture de la soupape d'échappement est établie grande.

7. Procédé de commande du fonctionnement d'un moteur à combustion interne (6) selon au moins l'une des revendications précédentes 1 à 6, dans lequel lorsque le moyen de détection de l'état de fonctionnement détecte l'état de décélération rapide, le degré d'ouverture de la soupape de commande de l'échappement est commandé à une ouverture plus grande que celle de la condition d'état de fonctionnement stationnaire pour la même vitesse de moteur et/ou charge de moteur en retardant la vitesse de fermeture de la soupape de commande de l'échappement (43) proportionnellement à la grandeur du taux de diminution par temps unitaire de la vitesse du moteur et/ou de la charge du moteur.

8. Procédé de commande du fonctionnement d'un moteur à combustion interne (6) selon au moins l'une des revendications précédentes 4 à 7, dans lequel le degré d'ouverture de la soupape de commande de l'échappement est commandé de telle sorte que plus la température de l'eau de refroidissement du moteur (TW) est basse, plus l'augmentation de l'ouverture de la soupape de commande de l'échappement est établie grande dans l'état de fonctionnement de démarrage ou l'état de fonctionnement de préchauffage.

9. Procédé de commande du fonctionnement d'un moteur à combustion interne (6) selon au moins l'une des revendications précédentes 1 à 8, dans lequel un moyen de correction de débit d'injection du carburant augmente le débit d'injection du carburant dans l'état de fonctionnement de démarrage ou de préchauffage à un débit supérieur à celui des conditions de l'état de fonctionnement stationnaire pour la même vitesse de moteur et/ou charge de moteur.

10. Procédé de commande du fonctionnement d'un moteur à combustion interne (6) selon la revendication 9, dans lequel un moyen de correction de l'ouverture de la soupape d'étranglement augmente l'ouverture de la soupape d'étranglement dans l'état de fonctionnement de démarrage ou de préchauffage à une ouverture supérieure à celle des conditions de l'état de fonctionnement stationnaire pour la même vitesse de moteur et/ou charge du moteur.

11. Procédé de commande du fonctionnement d'un moteur à combustion interne (6) selon au moins l'une des revendications précédentes 1 à 10, dans lequel le degré d'ouverture de la soupape de commande de l'échappement est commandé à celui de l'état de fonctionnement stationnaire, à une ouverture de soupape de commande de l'échappement de démarrage qui est supérieure au degré d'ouverture dudit degré d'ouverture de l'état de fonctionnement stationnaire dans l'état de fonctionnement de démarrage, et à un degré d'ouverture de la soupape de commande de l'échappement de préchauffage qui est entre le degré d'ouverture de l'état d'ouverture stationnaire et le degré d'ouverture de la soupape de commande de l'échappement de démarrage.

12. Procédé de commande du fonctionnement d'un moteur à combustion interne (6) selon la revendication 11, dans lequel le degré d'ouverture de la soupape de commande de l'échappement est commandé au degré d'ouverture correspondant à la vitesse du moteur et/ou au degré d'ouverture sensible à la charge du moteur de la soupape de commande de l'échappement (43) pendant l'état de fonctionnement stationnaire, à un degré d'ouverture de la soupape de commande de l'échappement de démarrage qui est supérieur au degré d'ouverture de l'état de fonctionnement stationnaire dans l'état de fonctionnement de démarrage, et à un degré d'ouverture de la soupape de commande de l'échappement de préchauffage qui est entre le degré d'ouverture de l'état de fonctionnement stationnaire et le degré d'ouverture de la soupape de commande de l'échappement de démarrage.

13. Procédé de commande du fonctionnement d'un moteur à combustion interne (6) selon au moins l'une des revendications précédentes 1 à 12, dans lequel ledit dispositif de commande (50) comprend des cartes préenregistrées pour commander ledit fonctionnement du moteur.

14. Procédé de commande du fonctionnement d'un moteur à combustion interne (6) selon au moins l'une des revendications précédentes 1 à 13, dans lequel ledit moteur à combustion interne est un moteur à combustion interne à deux temps du type à injection en cylindre.

15. Moteur à combustion interne (6) comprenant un système d'admission d'air ayant une soupape d'étranglement (31), un système d'échappement ayant une soupape de commande de l'échappement (43), un moyen d'injection du carburant (49), un moyen formant accélérateur, et un dispositif de commande (50) pour commander les composantes du moteur en réaction aux conditions de fonctionnement du moteur détectées, telles que la vitesse du moteur et/ou la charge du moteur, ledit dispositif de commande (50) étant adapté pour détecter un état de fonctionnement du moteur, pour déterminer si ledit état de fonctionnement du moteur est un état de fonctionnement stationnaire pendant lequel les conditions de fonctionnement du moteur sont constantes ou un état transitoire, pour commander un degré d'ouverture de ladite soupape de commande de l'échappement (43) vers un degré d'ouverture correspondant à la vitesse du moteur et/ou un degré d'ouverture sensible à la charge du moteur de la soupape de commande de l'échappement (43) pendant l'état de fonctionnement stationnaire, **caractérisé en ce que** ledit dispositif de commande (50) est adapté pour déterminer si ledit état transitoire au moins est une accélération rapide et pour commander ledit degré d'ouverture de ladite soupape de commande de l'échappement (43) à un degré d'ouverture plus grand pendant ledit état de fonctionnement transitoire, comparé aux conditions de l'état de fonctionnement stationnaire, pour la même vitesse de moteur et/ou la même charge de moteur.

16. Moteur à combustion interne (6) selon la revendication 15, **caractérisé en ce que** ledit dispositif de commande (50) est en outre adapté pour déterminer si ledit état transitoire comprend en outre une décélération rapide.

17. Moteur à combustion interne (6) selon la revendication 15 ou 16, dans lequel ledit état de fonctionnement transitoire comprend en outre le démarrage et/ou le préchauffage.

18. Moteur à combustion interne (6) selon au moins l'une des revendications précédentes 15 à 17, dans lequel lesdites conditions de fonctionnement du moteur peuvent être détectées par des moyens formant détecteurs comprenant un détecteur de rotation (51), un détecteur d'ouverture de l'accélérateur (52) et, en option, un détecteur de la température de l'eau (53), un détecteur de l'angle de manivelle (54), un détecteur de la pression d'échappement (55), un détecteur de la pression du carter-moteur (56), un détecteur de la pression ambiante (57) et un détecteur de la température ambiante (58).

19. Moteur à combustion interne (6) selon au moins l'une des revendications précédentes 15 à 18, dans lequel lorsque le moyen de détection de l'état de fonctionnement détecte l'état d'accélération rapide, le degré d'ouverture de la soupape de commande de l'échappement est commandé de telle sorte que plus le taux d'augmentation par temps unitaire de l'ouverture de l'accélérateur et/ou de la rotation du moteur est grand, plus est grande l'augmentation de l'ouverture de la soupape de commande de l'échappement.

20. Moteur à combustion interne (6) selon au moins l'une des revendications précédentes 15 à 19, dans lequel le degré d'ouverture de la soupape de commande de l'échappement peut être commandé de telle manière que plus l'ouverture de l'accélérateur et/ou la vitesse du moteur est petite dans une plage de fonctionnement, plus l'augmentation de l'ouverture de la soupape d'échappement est établie grande.

21. Moteur à combustion interne (6) selon au moins l'une des revendications précédentes 15 à 20, dans lequel lorsque le moyen de détection de l'état de fonctionnement détecte l'état de décélération rapide, le degré d'ouverture de la soupape de commande de l'échappement peut être commandé à une ouverture plus grande que celle de la condition de l'état de fonctionnement stationnaire pour la même vitesse de moteur et/ou charge de moteur en retardant la vitesse de fermeture de la soupape de commande de l'échappement (43) proportionnellement à la grandeur du taux de diminution par temps unitaire de la vitesse du moteur et/ou de la charge du moteur.

22. Moteur à combustion interne (6) selon la revendication 20 ou 21, dans lequel le degré d'ouverture de la soupape de commande de l'échappement peut être commandé de manière telle que plus la température de l'eau de refroidissement du moteur (TW) est basse, plus l'augmentation de l'ouverture de la soupape de commande de l'échappement est établie grande dans l'état de fonctionnement de démarrage ou dans l'état de fonctionnement de préchauffage.

23. Moteur à combustion interne (6) selon au moins l'une des revendications précédentes 15 à 22, dans lequel un moyen de correction du débit d'injection du carburant augmente le débit d'injection du carburant dans l'état de fonctionnement de démarrage ou de préchauffage à un débit supérieur à celui des conditions de l'état de fonctionnement stationnaire pour la même vitesse de moteur et/ou charge de moteur.

24. Moteur à combustion interne (6) selon la revendication 23, dans lequel un moyen de correction de l'ouverture de la soupape d'étranglement augmente le degré d'ouverture de la soupape d'étranglement dans l'état de fonctionnement de démarrage ou de préchauffage à une ouverture supérieure à celle des conditions de l'état de fonctionnement stationnaire pour la même vitesse de moteur et/ou charge de moteur.

25. Moteur à combustion interne (6) selon au moins l'une des revendications précédentes 15 à 24, dans lequel le degré d'ouverture de la soupape de commande de l'échappement peut être commandé à celui de l'état de fonctionnement stationnaire, à une ouverture de soupape de commande de l'échappement de démarrage qui est supérieure au degré d'ouverture dudit degré d'ouverture de l'état de fonctionnement stationnaire dans l'état de fonctionnement de démarrage, et à un degré d'ouverture de la soupape de commande de l'échappement de préchauffage qui est entre le degré d'ouverture de l'état d'ouverture stationnaire et le degré d'ouverture de la soupape de commande de l'échappement de démarrage.

26. Moteur à combustion interne (6) selon la revendication 25, dans lequel le degré d'ouverture de la soupape de commande de l'échappement est commandé au degré d'ouverture correspondant à la vitesse de moteur et/ou au degré d'ouverture sensible à la charge du moteur de la soupape de commande de l'échappement (43) pendant l'état de fonctionnement stationnaire, à un degré d'ouverture de la soupape de commande de l'échappement de démarrage qui est supérieur au degré d'ouverture de l'état de fonctionnement stationnaire dans l'état de fonctionnement de démarrage, et à un degré d'ouverture de la soupape de commande de l'échappement de préchauffage qui est entre le degré d'ouverture de l'état de fonctionnement stationnaire et le degré d'ouverture de la soupape de commande de l'échappement de démarrage.

27. Moteur à combustion interne (6) selon au moins l'une des revendications précédentes 15 à 26, dans lequel ledit dispositif de commande (50) comprend des cartes préenregistrées pour commander ledit fonctionnement du moteur.

28. Moteur à combustion interne (6) selon au moins l'une des revendications précédentes 15 à 27, dans lequel ledit moteur à combustion interne est un moteur à combustion interne à deux temps du type à injection en cylindre.
